# EUROPEAN PATENT APPLICATION

(11) **EP 4 617 134 A1**
(43) Date of publication of application: **17.09.2025**
(21) Application number: 25161969.8
(22) Date of filing: 05.03.2025
(51) Int. Cl.: B60W 30/14, B60W 50/08

(54) **CONTROL DEVICE FOR VEHICLE, CONTROL METHOD FOR VEHICLE, AND COMPUTER PROGRAM**

(30) Priority: 13.03.2024 JP 2024039092
(71) Applicant: TOYOTA JIDOSHA KABUSHIKI KAISHA, Toyota-shi, Aichi-ken, 471-8571 (JP)
(72) Inventor: KIKUCHI, Takuro, TOYOTA-SHI, AICHI-KEN, 471-8571 (JP)
(74) Representative: Cabinet Beau de Loménie

(57) **Abstract**

A control device (4) configured to judge that an accelerator pedal of the vehicle (100) has been mistakenly operated when predetermined judgment conditions stand, limit part or all of a drive force of the vehicle (100) generated corresponding to an amount of depression of the accelerator pedal when judging that the accelerator pedal has been mistakenly operated, and ease the judgment conditions while driver assist in which acceleration and deceleration of the vehicle (100) are performed automatically is being performed compared to when that driver assist is not being performed.

## Description

### FIELD

The present invention relates to a control device for a vehicle, a control method for a vehicle, and a computer program.

### BACKGROUND

Japanese Unexamined Patent Publication No. 2007-170232 discloses a conventional running control device which judges mistaken depression of an accelerator pedal and brake pedal based on the state of depression of the accelerator pedal.

### SUMMARY

If a driver places his foot on an accelerator pedal or brake pedal and himself accelerates or decelerates a vehicle, the driver can drive the vehicle while physically feeling the match between the driver's own pedal operation and the vehicle behavior, so mistaken operation such as mistaken depression of the accelerator pedal is unlikely to occur. On the other hand, when performing tracking control or other driver assist in which the vehicle is automatically accelerated or decelerated, the driver tends to keep his foot continuously off both the accelerator pedal and brake pedal. When in such a state, if an event occurs requiring sudden braking, since the driver does not physically feel the match of the pedal operation and vehicle behavior, there is a possibility that he will end up instantly depressing the accelerator pedal mistaking it for the brake pedal. That is, mistaken operation of an accelerator pedal occurs more easily while driver assist in which a vehicle is automatically accelerated or decelerated is being performed compared to when driver assist is not being performed.

The present invention was made taking note of such a problem and has as its object to keep a vehicle from ending up being unnecessarily made to accelerate due to mistaken operation of an accelerator pedal.

To solve the above problem, a control device for a vehicle according to one aspect of the present invention is configured to judge that an accelerator pedal of the vehicle has been mistakenly operated when predetermined judgment conditions stand, limit part or all of a drive force of the vehicle generated corresponding to an amount of depression of the accelerator pedal when judging that the accelerator pedal has been mistakenly operated, and ease the judgment conditions while driver assist in which acceleration and deceleration of the vehicle are performed automatically is being performed compared to when that driver assist is not being performed.

Further, a control method for a vehicle according to one aspect of the present invention comprises judging that an accelerator pedal of the vehicle has been mistakenly operated when predetermined judgment conditions stand, limiting part or all of a drive force of the vehicle generated corresponding to an amount of depression of the accelerator pedal when judging that the accelerator pedal has been mistakenly operated, and easing the judgment conditions while driver assist in which acceleration and deceleration of the vehicle are performed automatically is being performed compared to when that driver assist is not being performed.

Further, according to one aspect of the present invention, there is provided a computer program. The computer program makes a computer execute processing for judging that an accelerator pedal of the vehicle has been mistakenly operated when predetermined judgment conditions stand, limiting part or all of a drive force of the vehicle generated corresponding to an amount of depression of the accelerator pedal when judging that the accelerator pedal has been mistakenly operated, and easing the judgment conditions while driver assist in which acceleration and deceleration of the vehicle are performed automatically is being performed compared to when that driver assist is not being performed.

According to these aspects of the present invention, it is possible to keep a vehicle from ending up being unnecessarily made to accelerate due to mistaken operation of an accelerator pedal.

### BRIEF DESCRIPTION OF DRAWINGS

FIG. 1 is a schematic view of the configuration of a vehicle according to a first embodiment of the present invention.
FIG. 2 is a flow chart for explaining processing for setting judgment conditions for judgment of mistaken operation of an accelerator pedal according to the first embodiment of the present invention.
FIG. 3 is a flow chart for explaining processing for setting judgment conditions for judgment of mistaken operation of an accelerator pedal according to a second embodiment of the present invention.
FIG. 4 is a flow chart for explaining processing for setting judgment conditions for judgment of mistaken operation of an accelerator pedal according to a third embodiment of the present invention.

### DESCRIPTION OF EMBODIMENTS

Below, referring to the drawings, embodiments of the present disclosure will be explained in detail. Note that, in the following explanation, similar components will be assigned the same reference notations.

### (First Embodiment)

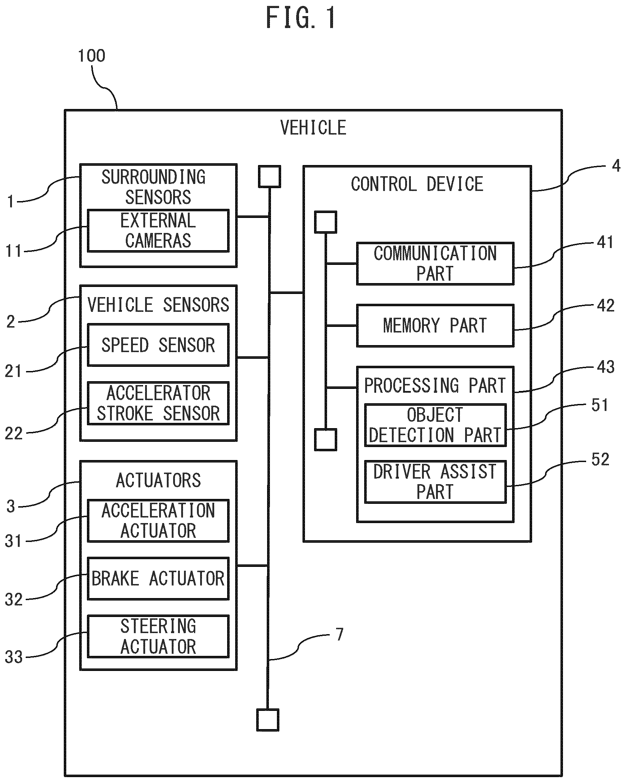

FIG. 1 is a schematic view of the configuration of a vehicle 100 according to a first embodiment of the present invention.

The vehicle 100 is provided with surrounding sensors 1, vehicle sensors 2, actuators 3, and a control device 4. The surrounding sensors 1, vehicle sensors 2, actuators 3, and control device 4 are connected to be able to communicate through an internal vehicle network 7 based on a standard such as a Control Area Network.

The surrounding sensors 1 are sensors for generating surrounding data showing the situation in the surroundings of the vehicle 100. In the present embodiment, as the surrounding sensors 1, one or more external cameras 11 for capturing the surroundings of the vehicle 100 are provided.

The external cameras 11 capture the surroundings of the vehicle 100 by a predetermined frame rate (for example, 10Hz to 40Hz) and generate surrounding images showing the surroundings of the vehicle 100. The external cameras 11 send the generated surrounding images as surrounding data to the control device 4 each time generating the surrounding images.

Note that, instead of the external cameras 11 or in addition to the external cameras 11, a distance measuring sensor for measuring the distance to another vehicle, pedestrian, or other object present in the surroundings of the vehicle 100 may be provided as a surrounding sensor 1. As examples of distance measuring sensors, for example, a lidar (light detection and ranging) device emitting laser light and measuring a distance based on the reflected light, a millimeter wave radar sensor emitting an electrical wave and measuring a distance based on its reflected wave, etc. may be mentioned.

The vehicle sensors 2 are sensors for generating vehicle data showing the state of the vehicle 100. In the present embodiment, as the vehicle sensors 2, for example, a speed sensor 21 for generating speed data showing the running speed of the vehicle 100, an accelerator stroke sensor 22 for detecting an amount of depression of an accelerator pedal of the vehicle 100, etc. are provided. The vehicle sensors 2 send the data acquired as vehicle data to the control device 4.

The actuators 3 are devices used for controlling operations of the vehicle 100. In the present embodiment, as the actuators 3, acceleration actuators 31 for controlling acceleration of the vehicle 100 (for example, at least one of the engine and motor), brake actuators 32 for controlling braking of the vehicle 100 (for example, a hydraulic actuator), and steering actuators 33 for controlling steering of the vehicle 100 (for example, a steering motor) are provided.

The control device 4 is an ECU (electronic control unit) provided with a communication part 41, storage part 42, and processing part 43.

The communication part 41 has a communicate interface circuit for connecting the control device 4 to the internal vehicle network 7. The communication part 41 supplies the various data received from the sensors land 2, etc. to the processing part 43. Further, the communication part 41 outputs the various signals output from the processing part 43 to the actuators 5, etc.

The storage part 42 has an HDD (hard disk drive), SSD (solid state drive), semiconductor memory, or other storage medium and stores various computer programs and data etc. used for processing at the processing part 43.

The processing part 43 has one or more CPUs (central processing units) and their peripheral circuits and runs various computer programs stored in the storage part 42. The processing part 43 is for example a processor. The processor may further have other processing circuits such as a logical operation unit, numerical operation unit, or graphic processing unit. The processing part 43 performs processing according to a computer program to thereby function as an object detection part 51 and driver assist part 52 and operates as function parts (modules) for realizing predetermined functions. In the following explanation, if explaining processing with the functions 51 and 52 as the subjects, this shows that the processing part 43 is running a program for realizing the function parts 51 and 52.

Below, the content of the specific processing performed at the control device 4 will be explained. That is, the contents of the function parts 51 and 52 realized by the processing part 43 performing processing in accordance with a program will be explained.

The object detection part 51 detects an object present around the vehicle 100 based on the surrounding data received from the surrounding sensors 1. The object detection part 51, for example, successively inputs surrounding images received from the external cameras 11 to a classifier to detect a region in the surrounding images in which other vehicles, two-wheeled vehicles, pedestrians, buildings, and other objects are shown and the types of objects shown in the region. The classifier, for example, can be made a convolutional neural network (CNN) having a plurality of convolutional layers connected in series from the input side to the output side. The object detection part 51 uses the standard sizes of objects stored in the storage part 42 for each type of object and the size of an object detected in the surrounding images to estimate a distance from the external cameras 11 to the object and tracks the object detected in the surrounding images along a time series to thereby a calculate a position and speed of the object. Note that, the method of detection of an object is not limited to such a method. Various known techniques can be used for detection.

The driver assist part 52 performs various driver assist for the driver of the vehicle 100. In the present embodiment, the driver assist part 52 performs driver assist for automatic acceleration and deceleration of the vehicle 100. As one example of such driver assist, for example, tracking control which controls the acceleration actuator 31 and brake actuator 32 to automatically perform driving operations relating to acceleration and braking so as to enable running following a preceding vehicle while maintaining the vehicle-to-vehicle distance at a suitable vehicle-to-vehicle distance may be mentioned. If a brake operation is performed by the driver during tracking control, the tracking control is stopped and driving operations by the driver are switched to.

Further, the driver assist part 52 performs driver assist for securing the safety of the driver. As one example of such driver assist, for example, acceleration suppression control for judging that a pedal operation of the accelerator pedal (below, referred to as an "accelerator operation") was due to a mistaken operation such as mistaken depression if predetermined conditions stand when that accelerator operation is performed and limiting part or all of the drive force of the vehicle 100 generated corresponding to the amount of depression of the accelerator pedal so as to suppress acceleration due to mistaken operation of an accelerator pedal.

Here, when a driver places his foot on an accelerator pedal or brake pedal and himself accelerates or decelerates a vehicle, the driver can drive the vehicle 100 while physically feeling the match between the driver's own pedal operation and the vehicle behavior, so mistaken operation such as mistaken depression of the accelerator pedal is unlikely to occur. On the other hand, when performing tracking control or other driver assist in which a vehicle 100 is automatically accelerated or decelerated, the driver tends to keep his foot continuously off both the accelerator pedal and brake pedal. When in such a state, if an event occurs requiring sudden braking, since the driver does not physically feel the match of the pedal operation and vehicle behavior, there is a possibility that he will end up instantly depressing the accelerator pedal mistaking it for the brake pedal. That is, mistaken operation of an accelerator pedal occurs more easily while tracking control or other driver assist in which a vehicle 100 is automatically accelerated or decelerated is performed compared to when that driver assist is not being performed.

Therefore, in the present embodiment, the judgment conditions for judgment of mistaken operation of an accelerator pedal while tracking control or other driver assist in which the vehicle 100 is automatically accelerated or decelerated is performed and the usual judgment conditions for judgment of mistaken operation of an accelerator pedal when that driver assist is not being performed are made different so that it becomes easier to be judged that an accelerator operation is a mistaken operation when an accelerator operation is performed when driver assist in which the vehicle 100 is automatically accelerated or decelerated is being performed compared with when driver assist is not being performed. Due to this, it is possible to keep the vehicle 100 from ending up being made to accelerate against the intent of the driver due to mistaken operation of an accelerator pedal during driver assist in which the vehicle 100 is automatically accelerated or decelerated.

Note that, in the present embodiment, if driver assist in which the vehicle 100 is automatically accelerated or decelerated is not being performed, when an object becoming an obstacle is detected within a predetermined distance in the front of or at the rear of the host vehicle and a rapid acceleration operation of the accelerator pedal by the driver is performed, it is judged that the accelerator pedal was mistakenly operated.

Further, if driver assist in which the vehicle 100 is automatically accelerated or decelerated is being performed, when simply a rapid acceleration operation of the accelerator pedal by the driver is performed, it is judged that the accelerator pedal was mistakenly operated. This is because, regardless of any presence of an obstacle before or after the host vehicle, when the vehicle 100 is automatically accelerated or decelerated, it is believed that a rapid acceleration operation would almost never be performed, although a rapid brake operation might be performed when the driver detects danger.

In this way, in the present embodiment, when driver assist in which the vehicle 100 is automatically accelerated or decelerated is being performed, by eliminating the condition for judgment of mistaken operation of an accelerator pedal that an object becoming an obstacle be detected within a predetermined distance in front of or at the rear of the host vehicle, the judgment conditions for judgment of mistaken operation of an accelerator pedal are eased and when an accelerator operation is performed, it becomes easier to be judged that that accelerator operation is a mistaken operation. That is, by reducing the number of judgment conditions for judgment of mistaken operation of an accelerator pedal when driver assist in which the vehicle 100 is automatically accelerated or decelerated is performed compared to when that driver assist is not performed, the judgment conditions for judgment of mistaken operation of an accelerator pedal are eased.

Note that, the method for judging whether an accelerator operation by a driver is a rapid acceleration operation is not particularly limited. This may be judged by a known technique. For example, if one or both of the condition that the amount of depression of the accelerator pedal be greater than or equal to a predetermined amount and the condition that the speed of depression of the accelerator pedal be greater than or equal to a predetermined speed stand, it can be judged that the accelerator operation by the driver corresponds to a rapid acceleration operation. At this time, as the amount of depression of the accelerator pedal, the value of a parameter correlated with the amount of depression of the accelerator pedal (for example, opening degree of throttle valve of engine etc.) may be used instead.

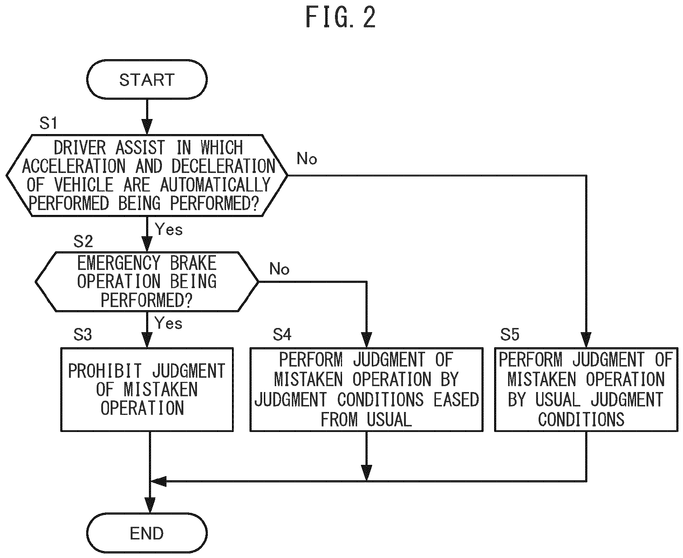

FIG. 2 is a flow chart for explaining processing for setting judgment conditions for judgment of mistaken operation of an accelerator pedal according to the present embodiment performed by the driver assist part 52 and in turn the control device 4. The control device 4 repeatedly performs the present routine by a predetermined processing period ΔT.

At step S1, the control device 4 judges whether tracking control or other driver assist in which the vehicle 100 is automatically accelerated or decelerated is being performed. If driver assist in which the vehicle 100 is automatically accelerated or decelerated is being performed, the control device 4 proceeds to the processing of step S2. On the other hand, if driver assist in which the vehicle 100 is automatically accelerated or decelerated is not being performed, the control device 4 proceeds to the processing of step S5.

At step S2, the control device 4 judges whether an emergency brake operation is being performed. An emergency brake operation is a brake operation automatically performed when, for example, avoiding collision with an obstacle popping out at the front of the host vehicle or when rapid deceleration is necessary due to some reason or another and a brake operation where the deceleration degree becomes greater than or equal to a predetermined deceleration degree. If an emergency brake operation is being performed, the control device 4 proceeds to the processing of step S3. On the other hand, if an emergency brake operation is not being performed (that is, when an accelerator operation or normal brake operation (brake operation where deceleration degree is less than predetermined deceleration degree) is being performed or these operations are not being performed), the control device 4 proceeds to the processing of step S4.

At step S3, the control device 4 prohibits performance of judgment of mistaken operation of an accelerator pedal. The reason is as follows.

That is, for example, conceivably the device may end up reacting with a plastic bag in the front and an emergency brake operation may end up being unnecessarily performed automatically. For this reason, if an emergency brake operation ends up being unnecessarily performed automatically, the driver is preferably made able to step on the accelerator pedal to quickly stop the emergency brake operation and again accelerate the vehicle. However, unless prohibiting performance of judgment of mistaken operation of an accelerator pedal during an emergency brake operation, when the driver performs a rapid acceleration operation of the accelerator pedal, that operation will end up being judged to be mistaken operation of an accelerator pedal. As a result, it ends up becoming impossible to make the vehicle 100 accelerate again like the driver desires.

At step S4, the control device 4 eases the judgment conditions for judgment of mistaken operation of an accelerator pedal compared with the normal judgment conditions when driver assist in which the vehicle 100 is automatically accelerated or decelerated is not performed and performs judgment of mistaken operation of an accelerator pedal by the eased judgment conditions.

At step S5, the control device 4 performs judgment of mistaken operation of an accelerator pedal by the usual judgment conditions.

As explained above, in the present embodiment, the usual judgment conditions when driver assist in which the vehicle 100 is automatically accelerated or decelerated is not being performed are made the condition that an object becoming an obstacle is detected within a predetermined distance in front of or at the rear of the host vehicle and the condition that a rapid acceleration operation of the accelerator pedal has been performed by the driver. Further, the judgment conditions eased from the usual judgment conditions are the usual judgment conditions minus the condition that an object becoming an obstacle is detected within a predetermined distance in front of or at the rear of the host vehicle, that is, are made simply that a rapid acceleration operation of the accelerator pedal has been performed by the driver.

In this way, in the present embodiment, the number of judgment conditions for judgment of mistaken operation of an accelerator pedal is changed between when driver assist in which the vehicle 100 is automatically accelerated or decelerated is being performed and when that driver assist is not being performed so that when an accelerator operation has been performed, it becomes easier to be judged that the accelerator operation is a mistaken operation.

However, it is also possible to make the number of judgment conditions for judgment of mistaken operation of an accelerator pedal the same while changing the severity (threshold values) of the judgment conditions for judgment of mistaken operation of an accelerator pedal between when driver assist in which the vehicle 100 is automatically accelerated or decelerated is being performed and when that driver assist is not being performed so that when an accelerator operation has been performed, it becomes easier to be judged that the accelerator operation is a mistaken operation.

For example, the judgment conditions for judgment of mistaken operation of an accelerator pedal are set to the condition that both when driver assist in which the vehicle 100 is automatically accelerated or decelerated is being performed and when that driver assist is not being performed, any of the amount of depression and speed of depression of the accelerator pedal or a predetermined parameter correlated with the amount of depression of the accelerator pedal be greater than or equal to a predetermined threshold value. The predetermined threshold value is made smaller when driver assist in which the vehicle 100 is automatically accelerated or decelerated is being performed compared to when that driver assist is not being performed so that when an accelerator operation has been performed, it becomes easier to be judged that the accelerator operation is a mistaken operation.

At this time, the value of the predetermined threshold value when driver assist in which the vehicle 100 is automatically accelerated or decelerated is not being performed may, for example, be set infinitely large etc. so that judgment of mistaken operation of an accelerator pedal is substantially not performed when that driver assist is not being performed. Due to this, when driver assist in which the vehicle 100 is automatically accelerated or decelerated is not being performed, judgment of mistaken operation of an accelerator pedal is substantially no longer performed, so when an accelerator operation has been performed when that driver assist is being performed, it becomes easier to be judged that the accelerator operation is a mistaken operation.

The control device 4 of the vehicle 100 according to the present embodiment explained above is configured to judge that the accelerator pedal of the vehicle 100 has been mistakenly operated when predetermined judgment conditions stand, limit part or all of the drive force of the vehicle 100 generated corresponding to the amount of depression of the accelerator pedal when judging that the accelerator pedal has been mistakenly operated, and ease the judgment conditions for judgment of mistaken operation of an accelerator pedal while driver assist in which the vehicle 100 is automatically accelerated or decelerated is being performed compared to when that driver assist is not being performed.

As explained above, while tracking control or other driver assist in which the vehicle 100 is automatically accelerated or decelerated is being performed, the driver tends to keep his foot continuously off both the accelerator pedal and brake pedal, therefore mistaken operation of an accelerator pedal easily occurs. For this reason, by easing the judgment conditions for judgment of mistaken operation of an accelerator pedal while driver assist in which the vehicle 100 is automatically accelerated or decelerated is being performed, like in the present embodiment, when an accelerator operation is performed, it becomes easier to be judged that the accelerator operation is a mistaken operation. For this reason, during driver assist in which the vehicle 100 is automatically accelerated or decelerated, it is possible to keep the vehicle 100 from ending up being made to accelerate against the intent of the driver due to mistaken operation of an accelerator pedal.

Further, the control device 4 according to the present embodiment is configured so as to prohibit judgment of mistaken operation of an accelerator pedal when automatically reducing speed by a deceleration degree becoming greater than or equal to a predetermined value (emergency brake operation) if driver assist for automatically increasing or decreasing the speed of the vehicle 100 is being performed.

Due to this, it is possible to suspend an unnecessary emergency brake operation and make the vehicle 100 again accelerate by the driver stepping on the accelerator pedal.

Further, the control device 4 according to the present embodiment is configured to suspend driver assist in which the vehicle 100 is automatically accelerated or decelerated when it is judged that the accelerator pedal has been mistakenly operated during that driver assist.

If a brake operation is performed by the driver while tracking control or other driver assist in which the vehicle 100 is automatically accelerated or decelerated is being performed, usually that driver assist is suspended and driving operations by the driver are switched to. Further, "when the accelerator pedal has been mistakenly operated" means, in other words, when the driver has wanted to perform a brake operation. Therefore, when it is judged that the accelerator pedal was mistakenly operated, by suspending driver assist in which the vehicle 100 is automatically accelerated or decelerated, it is possible to switch to driving operations by the driver himself smoothly without the driver feeling odd.

Note that, in the present embodiment, the control device 4 is configured so as to judge that judgment conditions for judgment of mistaken operation of an accelerator pedal stand when all of a plurality of judgment conditions stand when driver assist in which the vehicle 100 is automatically accelerated or decelerated is not being performed and to eliminate some of the conditions among the plurality of conditions so as to ease the judgment conditions for judgment of mistaken operation of an accelerator pedal while that driver assist is being performed.

However, the control device 4 may also be configured so that if, for example, the judgment conditions for judgment of mistaken operation of an accelerator pedal include at least the condition that an amount of depression or speed of depression of the accelerator pedal or a predetermined parameter correlated to the amount of depression of the accelerator pedal be greater than or equal to a predetermined threshold value, it makes the predetermined threshold value smaller while driver assist in which the vehicle 100 is automatically accelerated or decelerated is being performed compared to when that driver assist is not being performed so as to ease the judgment conditions for judgment of mistaken operation of an accelerator pedal.

### (Second Embodiment)

Next, a second embodiment of the present invention will be explained. The present embodiment differs from the first embodiment on the point of further easing the judgment conditions for judgment of mistaken operation of an accelerator pedal when acceleration is being automatically performed compared with when acceleration is not being automatically performed while driver assist in which the vehicle 100 is automatically accelerated or decelerated is being performed. Below, this point of difference will be focused on in the explanation.

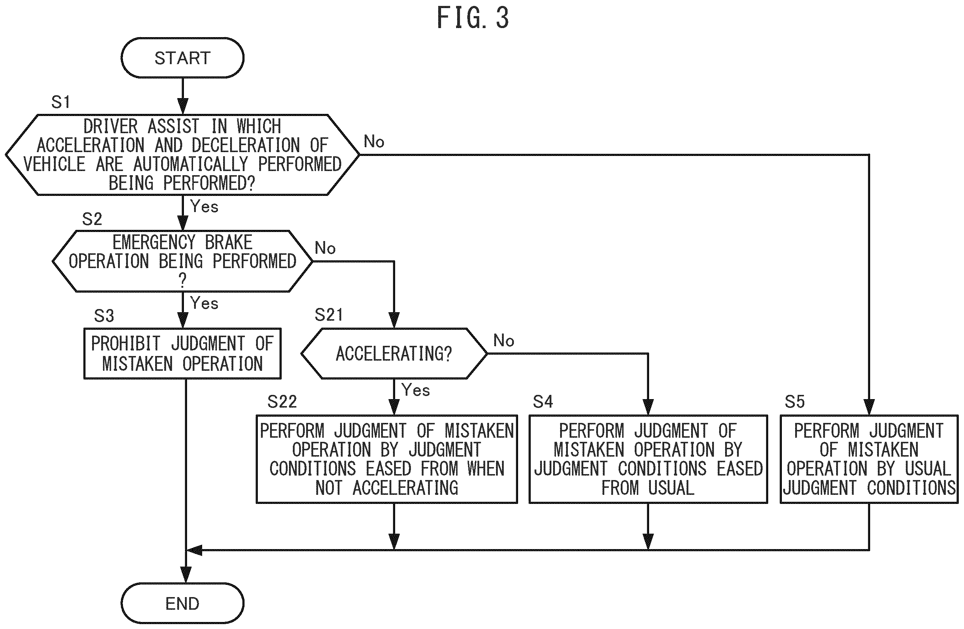

FIG. 3 is a flow chart for explaining the processing for setting the judgment conditions for judgment of mistaken operation of an accelerator pedal according to the present embodiment performed by the driver assist part 52 and in turn the control device 4. The control device 4 repeatedly performs the present routine by a predetermined processing period ΔT. In FIG. 3, the contents of the processing from step S1 to step S5 are similar to the first embodiment, so explanations will be omitted here.

At step S21, the control device 4 judges whether acceleration is being automatically performed while driver assist in which the vehicle 100 is automatically accelerated or decelerated is being performed. If acceleration is being automatically performed while driver assist in which the vehicle 100 is automatically accelerated or decelerated is being performed, the control device 4 proceeds to the processing of step S22. On the other hand, if acceleration is not being automatically performed while driver assist in which the vehicle 100 is automatically accelerated or decelerated is being performed, the control device 4 proceeds to the processing of step S4.

At step S22, the control device 4 eases the judgment conditions for judgment of mistaken operation of an accelerator pedal compared with when acceleration is not being automatically performed while driver assist in which the vehicle 100 is automatically accelerated or decelerated is being performed and performs judgment of mistaken operation of an accelerator pedal by the eased judgment conditions.

For example, if the judgment conditions eased over the usual ones in step S4 include, like in the first embodiment, that a rapid acceleration operation of the accelerator pedal has been performed by the driver, it is possible to make the threshold value for judging whether an accelerator operation by the driver corresponds to a rapid acceleration operation smaller than the threshold value set at step S4 so as to further ease the judgment conditions of step S4. For example, if judging whether an accelerator operation by the driver corresponds to a rapid acceleration operation by judging whether any of the amount of depression and speed of depression of the accelerator pedal or a predetermined parameter correlated with the amount of depression of the accelerator pedal is greater than or equal to a predetermined threshold value, it is possible to make the value of the predetermined threshold value set at step S22 smaller than the value of the predetermined threshold value set at step S4 so as to further ease the judgment conditions for judgment of mistaken operation of an accelerator pedal.

The control device 4 of the vehicle 100 according to the present embodiment explained above is configured to further ease the judgment conditions for judgment of mistaken operation of an accelerator pedal when acceleration is being performed automatically while driver assist in which the vehicle 100 is automatically accelerated or decelerated is being performed compared with when acceleration is not being performed automatically while that driver assist is being performed.

When acceleration is being automatically performed while driver assist in which the vehicle 100 is automatically accelerated or decelerated is being performed, it is believed there would not be many scenarios in which the driver would have to step on the accelerator pedal more to further accelerate the vehicle. That is, when acceleration is being automatically performed while driver assist in which the vehicle 100 is automatically accelerated or decelerated is being performed, it can be said that there is a good possibility that the accelerator operation by the driver is a mistaken operation.

Therefore, by further easing the judgment conditions for judgment of mistaken operation of an accelerator pedal, like in the present embodiment, when acceleration is being automatically performed while driver assist in which the vehicle 100 is automatically accelerated or decelerated is being performed compared with when acceleration is not being automatically performed, it is possible to quickly judge mistaken operation in a scenario where there is a good possibility that the accelerator operation by the driver is a mistaken operation. Due to this, it is possible to keep the vehicle 100 from ending up being made to accelerate against the intent of the driver due to mistaken operation of an accelerator pedal.

### (Third Embodiment)

Next, a third embodiment of the present invention will be explained. The present embodiment differs from the first embodiment on the point of easing the judgment conditions for judgment of mistaken operation of an accelerator pedal only when acceleration is being automatically performed while driver assist in which the vehicle 100 is automatically accelerated or decelerated is being performed compared to when that driver assist is not being performed. Below, this point of difference will be focused on in the explanation.

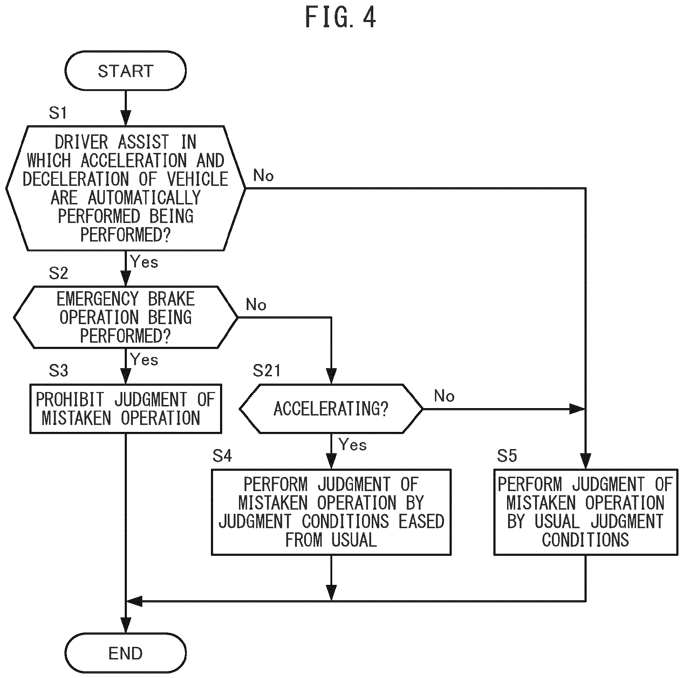

FIG. 4 is a flow chart for explaining the processing for setting the judgment conditions for judgment of mistaken operation of an accelerator pedal according to the present embodiment performed by the driver assist part 52 and in turn the control device 4. The control device 4 repeatedly performs the present routine by a predetermined processing period ΔT. In FIG. 4, the content of the processing from step S1 to step S5 is similar to the first embodiment and the content of the processing of step S21 is similar to the second embodiment.

As shown in the flow chart of FIG. 4, in the present embodiment, only when acceleration is being automatically performed while driver assist in which the vehicle 100 is automatically accelerated or decelerated is being performed, the judgment of mistaken operation of an accelerator pedal is performed by judgment conditions eased over the usual judgment conditions when that driver assist is not being performed. That is, according to the present embodiment, the judgment conditions for judgment of mistaken operation of an accelerator pedal are eased only for a scenario where when an accelerator operation is performed, there is a good possibility that the accelerator operation is a mistaken operation. For this reason, it is possible to keep an accelerator operation by the driver from ending up being judged to be a mistaken operation even when not a mistaken operation.

Above, embodiments of the present invention were explained, but the above embodiments only show some of the applications of the present invention. They are not meant to limit the technical scope of the present invention to the specific configurations of the above embodiments.

Further, for example, in the above embodiments, the computer program run at the control device 4 may be provided in a form recorded in a computer readable portable recording medium such as a semiconductor memory, magnetic recording medium or optical recording medium or may be provided as a computer program product.

## Claims

1. A control device (4) for a vehicle (100), wherein
the control device (4) is configured to:
judge that an accelerator pedal of the vehicle (100) has been mistakenly operated when predetermined judgment conditions stand;
limit part or all of a drive force of the vehicle (100) generated corresponding to an amount of depression of the accelerator pedal when judging that the accelerator pedal has been mistakenly operated; and
ease the judgment conditions while driver assist in which acceleration and deceleration of the vehicle (100) are performed automatically is being performed compared to when that driver assist is not being performed.

2. The control device (4) for a vehicle (100) according to claim 1, wherein
the control device (4) is configured to further ease the judgment conditions when acceleration is being automatically performed while the driver assist is being performed compared to when acceleration is not being performed.

3. The control device (4) for a vehicle (100) according to claim 1, wherein
the control device (4) is configured to ease the judgment conditions only when acceleration is being automatically performed while the driver assist is being performed compared to when the driver assist is not being performed.

4. The control device (4) for a vehicle (100) according to any one of claim 1 to claim 3, wherein
the control device (4) is configured to:
judge that the judgment conditions stand when all of a plurality of conditions stand when driver assist is not being performed; and
eliminate some of the conditions among the plurality of conditions while the driver assist is being performed so as to ease the judgment conditions.

5. The control device (4) for a vehicle (100) according to any one of claim 1 to claim 4, wherein
the judgment conditions include at least the condition that any of an amount of depression or speed of depression of the accelerator pedal or a predetermined parameter correlated with the amount of depression of the accelerator pedal be greater than or equal to a predetermined threshold value, and
the control device (4) is configured to ease the judgment conditions by making the predetermined threshold value smaller while driver assist is being performed compared to when driver assist is not being performed.

6. The control device (4) for a vehicle (100) according to any one of claim 1 to claim 5, wherein
the control device (4) is configured to prohibit the judgment of mistaken operation of an accelerator pedal if driver assist is being performed and deceleration with a deceleration degree greater than or equal to a predetermined value is being automatically performed.

7. The control device (4) for a vehicle (100) according to any one of claim 1 to claim 6, wherein
the control device (4) is configured to stop the driver assist when it is judged that the accelerator pedal has been mistakenly operated during that driver assist.

8. A control method for a vehicle (100), wherein
the control method comprises:
judging that an accelerator pedal of the vehicle (100) has been mistakenly operated when predetermined judgment conditions stand;
limiting part or all of a drive force of the vehicle (100) generated corresponding to an amount of depression of the accelerator pedal when judging that the accelerator pedal has been mistakenly operated; and
easing the judgment conditions while driver assist in which acceleration and deceleration of the vehicle (100) are performed automatically is being performed compared to when that driver assist is not being performed.

9. A computer program configured to make a computer execute processing for:
judging that an accelerator pedal of the vehicle (100) has been mistakenly operated when predetermined judgment conditions stand;
limiting part or all of a drive force of the vehicle (100) generated corresponding to an amount of depression of the accelerator pedal when judging that the accelerator pedal has been mistakenly operated; and
easing the judgment conditions while driver assist in which acceleration and deceleration of the vehicle (100) are performed automatically is being performed compared to when that driver assist is not being performed.
